(19) Europäisches Patentamt

European Patent Office

Office européen des brevets

(11) **EP 1 374 595 B1**

(12) **EUROPEAN PATENT SPECIFICATION**

(45) Date of publication and mention
of the grant of the patent:
**20.09.2006 Bulletin 2006/38**

(51) Int Cl.:
***H04N 7/26*** (2006.01)

(21) Application number: **02708586.9**

(22) Date of filing: **26.03.2002**

(86) International application number:
**PCT/IB2002/000997**

(87) International publication number:
**WO 2002/080565 (10.10.2002 Gazette 2002/41)**

(54) **VIDEO CODING METHOD AND DEVICE**

VIDEOKODIERUNGSVERFAHREN UND -VORRICHTUNG

PROCEDE DE CODAGE VIDEO ET DISPOSITIF DE CODAGE CORRESPONDANT

(84) Designated Contracting States:
**AT BE CH CY DE DK ES FI FR GB GR IE IT LI LU MC NL PT SE TR**

(30) Priority: **29.03.2001 EP 01400816**
**30.11.2001 EP 01403084**

(43) Date of publication of application:
**02.01.2004 Bulletin 2004/01**

(73) Proprietor: **Koninklijke Philips Electronics N.V.**
**5621 BA Eindhoven (NL)**

(72) Inventor: **RUOL, Vincent**
**NL-5656 AA Eindhoven (NL)**

(74) Representative: **Landousy, Christian et al**
**Philips Intellectual Property & Standards,**
**156 Boulevard Haussmann**
**75008 Paris (FR)**

(56) References cited:
**WO-A-99/07158**          **US-A- 5 579 121**

**Description**

The present invention relates to a video coding method applied to a sequence of video frames divided into macroblocks themselves subdivided into blocks, said method comprising for each frame of the sequence the steps of:

(A) encoding said frame in a first encoding pass with a fixed quantization step size, for generating a first output bitstream and statistics associated to each macroblock of this frame ;
(B) on the basis of said statistics, re-encoding said frame in a second encoding pass with a variable quantization step size, for generating a second output bitstream with, for each macroblock of this frame, a modified number of bits with respect to the first output bitstream.

The invention also relates to a corresponding encoding device.

The MPEG-2 standard, described for instance in the document "MPEG video coding: a basic tutorial introduction", by S.R.Ely, BBC-RD report, 1996/3, and now widespread in the field of digital television, is already used by broadcasters via satellite or cable, ant it is soon expected to be used for digital terrestrial broadcasting. An MPEG-2 compliant video encoder generates an MPEG-2 compliant bitstream, i.e. a bitstream with six layers of syntax : sequence, group of pictures (or GOP), picture (or frame), slice, macroblock and block (each frame is divided into macroblocks, each of which comprises four luminance blocks and two chrominance blocks, each block including 8 x 8 pixels).

Such an encoder distinguishes between three kinds of frames I, P or B, each GOP being a set of frames that starts with an I frame and includes a given number of P and B frames. In each macroblock of an I frame, each 8 x 8 block undergoes a discrete cosine transform (DCT), the obtained transform coefficients are quantized (a quantization scale factor being selected for each macroblock), and the resulting quantized DCT coefficients are scanned and encoded using a variable length code (VLC). In a P frame, a decision is taken in order to code each macroblock either as an I one (as described above) or as a P one, i.e. with the help of a unidirectional prediction identified by a motion vector. The motion vector indicates, for each macroblock, the translation between its prediction in the previous frame and the macroblock itself (in the current frame), only the error between them being coded as described above for each macroblock of an I frame (and transmitted with the associated motion vector). In a B frame, a decision has also to be taken between one of the two coding techniques described above (coding of an I macroblock, or of a P macroblock, the unidirectional predictive coding being based either on a previous frame as explained above or on a subsequent frame) and a bidirectional predictive coding, according to which an error coding is similarly carried out, but only after a motion compensated prediction obtained by interpolating a backward motion compensated prediction and a forward one.

After encoding by the video encoder (with a distinct degree of compression according to the kind of frame : B frames lead to the smallest number of bits when encoded, then P frames, and I frames), the obtained bitstream is stored in an encoder output buffer, transmitted, and finally either stored in a storage medium or immediately received by the buffer of a decoder and decoded. In the encoded bitstream, the number of bits resulting from the encoding process for each of the I, P, B frames can be modified by controlling the quantizer step size used for each macroblock, this adaptive quantization resulting in fewer bits, for a large quantizer step size, than if a smaller quantizer step size is used.

It has then been proposed, in order to fulfil a required constraint at the output of such an encoder, to carry out the encoding method in such a way that the output coded bitstream is obtained only after at least two encoding passes. For instance, in the international patent application WO 99/07158 (PHF98524), the sequence of frames is encoded in a first pass, with a constant quantizer step size. The bitstream thus generated does not necessarily fulfil the required constraint, but this first pass allows to obtain statistics of the processed frame (for example, motion vectors, complexities of the frames,... etc). The analysis step is followed by a second pass which processes said statistics in order to modify at least the quantizer step size and, thus, to perform a more harmonious distribution of bits for each macroblock of the concerned frame.

By differently allocating the number of bits used to encode each frame (while insuring that a maximum channel rate is not exceeded so as to avoid buffer problems at the decoder side), a variable bitrate is obtained, and the MPEG-2 standard allows, in the applications as mentioned previously, a great flexibility in the bitrates at which a program can be broadcast. However, the lower the bitrate is, the more compression artifacts may occur. These artifacts, that may be spatial (blocking, ringing, corner outliers) or temporal (mosquito noise), are very annoying for the viewers.

Reference is also made to US 5,579,121. This document discloses a real-time image compression processor. There are provided a first encoder for compressively encoding the video signal, and a second encoder for compressively encoding the signal obtainable by delaying such video signal for a given period of time. A parameter adjustment is executed for the second encoder in accordance with the compressed video signal obtained through the compressive encoding by the first encoder. The compressed video signal obtained by the second encoder is recorded on a recording medium.

## SUMMARY OF THE INVENTION

It is therefore a first object of the invention to propose an encoding method according to which the perceptual disturbance due to said artifacts is reduced.

More specifically, said first encoding pass may be provided for generating a first output bitstream and the complexity associated to each original macroblock of the processed frame, said modifying sub-step being then provided for multiplying said macroblock complexity by a scaling coefficient linearly depending on the global value corresponding to the concerned macroblock. The complexity is equal to the product of the number of bits used for coding each macroblock and the quantization step size.

According to an improvement of said coding method, it may also comprise, before the re-encoding step, the additional steps of:

(a) computing a normalization factor based on the following expression:

$$F(norm) = X(in) / X(out)$$

where X(in) and X(out) are respectively the sums of the values of statistics before and after the modifications according to said map;
(b) multiplying by said normalization factor each value of statistics after said modifications.

It is also another object of the invention to propose encoding devices corresponding to the above-mentioned implementations of the coding method according to the invention.

The invention will now be described in a more detailed manner, with reference to the accompanying drawings in which:

Fig. 1 shows a conventional coding scheme with two encoding passes;
Fig. 2 illustrates a modification of said encoding scheme according to the invention;
Fig. 3 shows the internal boundaries of a macroblock;
Fig. 4 illustrates another embodiment of the encoding method according to the invention;
Fig. 5 depicts an example of implementation of the method of Fig. 4.

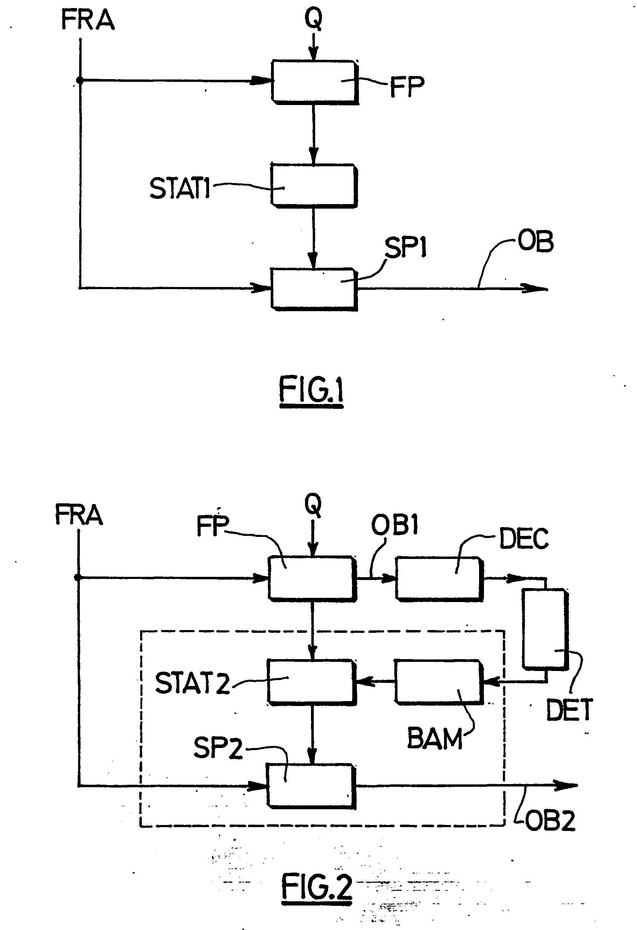

An encoding scheme such as described in the document WO 99/07158 previously cited may be schematically summarized as illustrated in Fig. 1. Each successive frame FRA is processed in the encoder, in a first pass FP during which the quantizer step size Q is constant. At the end of this first pass, some information (referenced by STAT1 in Fig. 1) is available : complexities of the processed macroblocks, motion vectors associated to each of said macroblocks, etc... Based on this information, a second pass SP 1 leading to an output bitstream OB is carried out, during which the quantizer step size is modified for each macroblock of the frame, in order to modify in OB the bit allocation corresponding to each of said macroblocks.

According to the invention, said encoding scheme may be modified as illustrated in Fig. 2, in order to reduce the number of artifacts. The output bitstream OB 1 available at the end of the first pass FP is decoded (in a decoder DEC) and the decoded bitstream is sent towards a blocking effect detector DET, described hereinunder. This detector yields a blocking artifact map BAM which is stored and used in order to modify the statistics (complexities in the present case), now referenced by STAT2 in Fig. 2. A second pass SP2, at the output of which an output bitstream OB2 is available, is then carried out, but now with a different quantizer step size for each macroblock (with respect to the second pass SP1 of Fig. 1) and with the result that the artifacts originally observed are now reduced.

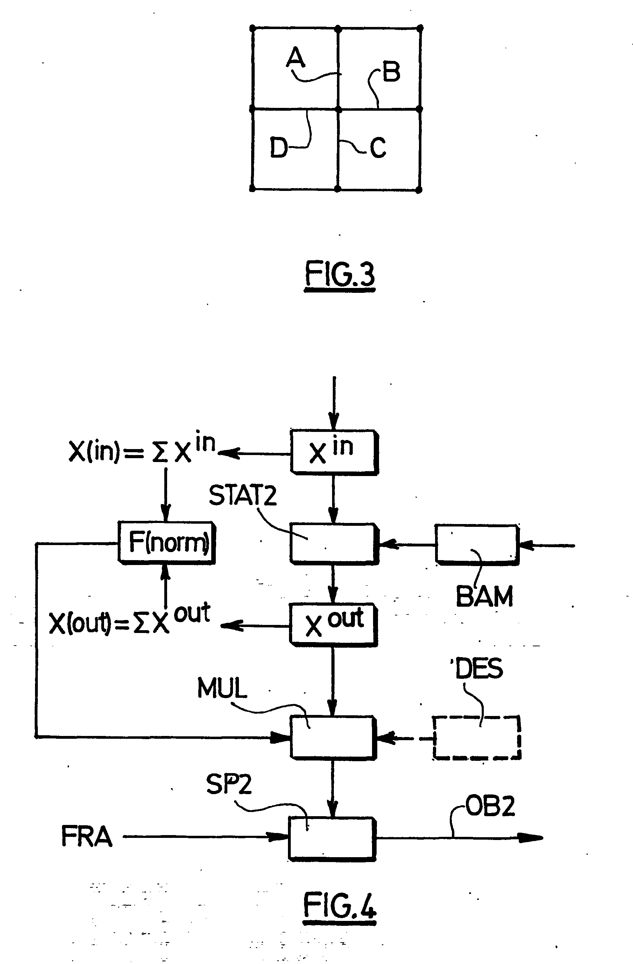

The blocking effect detection operation implemented by the detector DET is carried out as follows. As previously said, a macroblock is composed of four blocks. Excluding the blocking effects between macroblocks, the blocking effects are assumed to occur inside any macroblock, at anyone of the four internal block boundaries (referenced by A, B, C, D in Fig. 3). To each of said boundaries, a value V(A), V(B), V(C), V(D) is associated : "0" if no blocking effect is found and "1" in the opposite case. For each macroblock, a global value G is then defined as $G = V(A) + V(B) + V(C) + V(D)$, and the blocking artifact map, storing the value G for each macroblock, is constituted. For each macroblock, a first pass complexity X1, obtained by means of the first pass processing, is available. The complexity of an image or a part of an image is defined for instance in the patent US 5680483 (PHF94510), and various documents, for instance the patent US 5929914 (PHF95584), describe a solution for estimating a complexity and indicate the connection between such a complexity and the bitrate control of an encoder. This complexity X1 is then multiplied by a value depending on the global value G, which leads to a modified complexity: $X2 = X1 \times C(G)$, where C is a coefficient depending on G, for example according to the following dependence table:

| G | 0 | 1 | 2 | 3 | 4 |
|---|---|---|---|---|---|
| C(G) | 1 | 1,05 | 1,1 | 1,15 | 2 |

However, when such a method is applied to very blocky images, the whole image complexity is multiplied by the same factor. The image level regulation benefit is then lost, and the complexity weight of the image is higher in the GOPs, which disturbs the GOP level regulation.

The encoding scheme of Fig. 2 can then be improved as depicted in Fig.4 (which illustrates a modification of the part of Fig. 2 surrounded by a dotted line), by providing in the encoder an additional step which performs a kind of normalization of the output complexity. This additional step comprises the two following operations. First, a normalization factor F(norm) is computed, based on the following expression: F(norm) = X(in) / X(out), where X(in) is the sum, for all the macroblocks of the concerned frame, of the values $X^{in}$ received by STAT2, and X(out) is the similar sum, also for all the macroblocks, of the values $X^{out}$ available at the output of STAT2. Second, the output value $X^{out}$ of STAT2 is multiplied by F(norm) by means of a multiplier (MUL) provided between STAT2 and SP2.

Another embodiment of the invention, illustrated in Fig. 4, may comprise the following modification : the normalization factor is set to 1 when the input frame to be encoded is of I or P type, which allows to overweigh such frames in the GOP regulation. For that implementation, an additional decision step, referenced DES and shown in dotted line in Fig. 4, is provided.

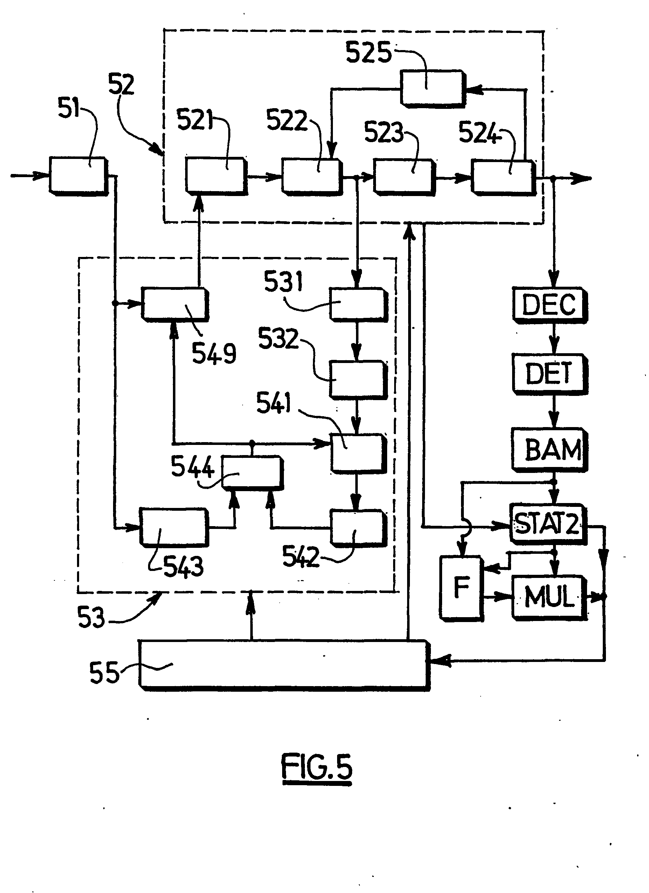

The coding method thus described may be implemented in the video encoding device of Fig. 5, where each block corresponds to a particular function that is performed under the supervision of a controller 55. The illustrated encoding device comprises in series an input buffer 51 receiving the sequence of video frames, a subtractor 549, a discrete cosine transform (DCT) circuit 521, a quantization circuit 522, a variable length coding circuit 523, an output buffer 524, and a bitrate regulation circuit 525 allowing to modify the quantization step size in the circuit 522. The circuits 521 to 525 constitute the main elements of a coding branch 52, to which a prediction branch 53, including an inverse quantization circuit 531, an inverse DCT circuit 532 and a prediction sub-system, is associated. This prediction sub-system itself comprises an adder 541, a buffer 542, and a motion compensation circuit 544 receiving on a second input the output of a motion estimation circuit 543 (said estimation is based on an analysis of the input signals available at the output of the buffer 51). The output signals of the motion compensation circuit 544 are sent backwards to the second input of the adder 541 and towards the subtracter 549 (also receiving the output signals of the buffer 51, for sending the difference between said output signals and the output signals of the circuit 544 towards the coding branch). The output of the illustrated encoding device is sent, after the first pass FP, towards the blocking effect decoding stage DEC, the output of which is sent towards the blocking effect detector DET. The blocking artefact map BAM yielded by the detector DET is then used to modify the statistics before the second pass SP2 is carried out. The additional normalization step is then implemented by means of the circuit F , that computes F(norm), and the multiplier MUL.

The foregoing description of the preferred embodiments of the invention has been presented for purposes of illustration and description. It is not intended to be exhaustive or to limit the invention to the precise form disclosed, and obviously modifications and variations, apparent to a person skilled in the art and intended to be included within the scope of this invention, are possible in light of the above teachings. It may for example be understood that the devices described herein can be implemented in hardware, software, or a combination of hardware and software, without excluding that a single item of hardware or software can carry out several functions or that an assembly of items of hardware or software or both carry out a single function. The described methods and devices may be implemented by any type of computer system or other apparatus adapted for carrying out the methods described herein. A typical combination of hardware and software could be a general-purpose computer system with a computer program that, when loaded and executed, controls the computer system such that it carries out the methods described herein.

Alternatively, a specific use computer, containing specialized hardware for carrying out one or more of the functional tasks of the invention could be utilized. The present invention can also be embedded in a computer program product, which comprises all the features enabling the implementation of the methods and functions described herein, and which - when loaded in a computer system - is able to carry out these methods and functions. Computer program, software program, program, program product, or software, in the present context mean any expression, in any language, code or notation, of a set of instructions intended to cause a system having an information processing capability to perform a particular function either directly or after either or both of the following : (a) conversion to another language, code or notation; and/or (b) reproduction in a different material form.

**Claims**

1. A video coding method applied to a sequence of video frames subdivided into macroblocks, said method comprising for each frame of the sequence the steps of

   (A) encoding (FP) said frame in a first encoding pass with a fixed quantization step size, for generating a first output bit stream and complexity values associated to each macroblock of said frame, said complexity values being equal to the product of the number of bits used for coding each macroblock and said quantization step size
   (B) decoding (DEC) said first output bitstream, for generating a decoded output bitstream
   (C) in said decoded output bitstream, detecting blocking artifacts for building up a map (BAM) of blocking effects, said map comprising, for each macroblock, a global value representative of a number of internal boundary artifacts within the concerned macroblock
   (D) calculating new complexity values for each macroblock by multiplying, for each macroblock, the complexity value obtained at step (A) by a scaling coefficient linearly depending on the global value of said macroblock
   (E) encoding said frame in a seconding encoding pass with a modified quantization step size associated to each macroblock, said modified quantization step size being calculated, for each macroblock, as a function of the new complexity values associated to each macroblock.

2. A video coding method according to claim 1, **characterized in that** calculating new complexity values at step (D) further includes multiplying each new complexity value by a normalization factor based on the following expression: F(norm) = X(in)/X(out)
   where X(in) is a sum of complexity values for all macroblocks derived in step (A) and X (out) is a sum of new complexity values for all macroblocks derived at step (D)

3. A video coding method according to claim 2, in which the normalization factor is set to 1 if the input frame to be encoded is of I or P type.

4. A device for encoding a sequence of video frames divided into macroblocks, said device comprising :

   (a) at least a coding branch (52), including in series at least a quantization circuit (522) and a variable length circuit (523) ;
   (b) a control circuit (55) provided for controlling for each frame of the sequence the implementation of the following steps :

      (A) encoding (FP) said frame in a first encoding pass with a fixed quantization step size, for generating a first output bitstream and complexity values associated to each macroblock of said frame, said complexity values being equal to the product of the number of bits used for coding each macroblock and said quantization step size
      (B) decoding (DEC) said first output bitstream, for generating a decoded output bitstream,
      (C) in said decoded output bitstream, detecting blocking artifacts for building up a map (BAM) of blocking effects, said map comprising, for each macroblack, a global value representative of a number of internal boundary artifacts within the concerned macroblock
      (D) calculating new complexity values for each macroblock by multiplying, for each macroblock, the complexity value obtained at step (A) by a scaling coefficient linearly depending on the global value of said macroblock
      (E) encoding said frame in a seconding encoding pass with a modified quantization step size associated to each macroblock, said modified quantization step size being calculated, for each macroblock, as a function of the new complexity values associated to each macroblock.

5. An encoding device according to claim 4, **characterized in that** calculating new complexity values at step (D) further includes multiplying each new complexity value by a normalization factor based on the following expression: F(norm) =X(in)/X(out)
   where X(in) is a sum of complexity values for all macroblocks derived in step (A) and X(out) is a sum of new complexity values for all macroblocks derived at step (D)

**Patentansprüche**

1. Videocodierungsverfahren, angewandt auf eine Sequenz von Videoframes, die in Makroblöcke aufgeteilt sind, wobei dieses Verfahren für jedes Frame der Sequenz die nachfolgenden Verfahrensschritte umfasst:

   (A) das Codieren (FP) des genannten Frames in einem ersten Codierungsvorgang mit einer festen Quantisierungsschrittgröße zum Erzeugen eines ersten Ausgangsbitstroms und von Komplexitätswerten, die mit jedem Makroblock des genannten Frames assoziiert sind, wobei die genannten Komplexitätswerte dem Produkt aus der Anzahl zum Codieren jedes Makroblocks benutzter Bits und der genannten Quantisierungsschrittgröße entsprechen,
   (B) das Decodieren (DEC) des genannten ersten Ausgangsbitstroms zum Erzeugen eines decodierten Ausgangsbitstroms,
   (C) das in dem genannten decodierten Ausgangsbitstrom Detektieren von Sperrartefakten zum Bilden einer Abbildung (BAM) von Sperreffekten, wobei diese Abbildung für jeden Makroblock einen globalen Wert aufweist, der für eine Anzahl interner Begrenzungsartefakte innerhalb des betreffenden Makroblocks repräsentativ ist,
   (D) das Berechnen neuer Komplexitätswerte für jeden Makroblock indem für jeden Makroblock der in dem Schritt (A) erhaltene Komplexitätswert mit einem Skalierungskoeffizienten multipliziert wird, der von dem globalen Wert des genannten Makroblocks linear abhängig ist,
   (E) das Codieren des genannten Frames in einem zweiten Codierungsvorgang mit einer modifizierten Quantisierungsschrittgröße, die mit jedem Makroblock assoziiert ist, wobei die modifizierte Quantisierungsschrittgröße für jeden Makroblock als eine Funktion der neuen mit jedem Makroblock assoziierten Komplexitätswerte berechnet wird.

2. Videocodierungsverfahren nach Anspruch 1, **dadurch gekennzeichnet, dass** das Berechnen neuer Komplexitätswerte in dem Schritt (D) weiterhin Folgendes umfasst:

   das Multiplizieren jedes neuen Komplexitätswertes mit einem Normalisierungsfaktor auf Basis des nachfolgenden Ausdrucks: $F(norm) = X(in) / X(out)$

   wobei $X(in)$ eine Summe von Komplexitätswerten für alle in dem Schritt (A) hergeleiteten Makroblöcke ist, und wobei $X(out)$ eine Summe neuer Komplexitätswerte für alle in dem Schritt (D) hergeleiteten Makroblöcke ist.

3. Videocodierungsverfahren nach Anspruch 2, wobei der Normalisierungsfaktor auf 1 gesetzt wird, wenn das zu codierende Eingangsframe von dem I- oder P-Typ ist.

4. Anordnung zum Codieren einer Sequenz von Videoframes, die in Makroblöcke aufgeteilt sind, wobei diese Anordnung Folgendes umfasst:

   (a) wenigstens einen Codierungszweig (52) mit einer Reihenschaltung aus wenigstens einer Quantisierungsschaltung (522) und einer variablen Längenschaltung (523);
   (b) eine Steuerschaltung (55), vorgesehen um für jedes Frame der Sequenz die Implementierung der nachfolgenden Schritte zu steuern:

   (A) das Codieren (FP) des genannten Frames in einem ersten Codierungsvorgang mit einer festen Quantisierungsschrittgröße zum Erzeugen eines ersten Ausgangsbitstroms und von Komplexitätswerten, die mit jedem Makroblock des genannten Frames assoziiert sind, wobei die genannten Komplexitätswerte dem Produkt aus der Anzahl zum Codieren jedes Makroblocks benutzter Bits und der genannten Quantisierungsschrittgröße entsprechen,
   (B) das Decodieren (DEC) des genannten ersten Ausgangsbitstroms zum Erzeugen eines decodierten Ausgangsbitstroms,
   (C) das in dem genannten decodierten Ausgangsbitstrom Detektieren von Sperrartefakten zum Bilden einer Abbildung (BAM) von Sperreffekten, wobei diese Abbildung für jeden Makroblock einen globalen Wert aufweist, der für eine Anzahl interner Begrenzungsartefakte innerhalb des betreffenden Makroblocks repräsentativ ist,
   (D) das Berechnen neuer Komplexitätswerte für jeden Makroblock indem für jeden Makroblock der in dem Schritt (A) erhaltene Komplexitätswert mit einem Skalierungskoeffizienten multipliziert wird, der von dem globalen Wert des genannten Makroblocks linear abhängig ist,
   (E) das Codieren des genannten Frames in einem zweiten Codierungsvorgang mit einer modifizierten Quantisierungsschrittgröße, die mit jedem Makroblock assoziiert ist, wobei die modifizierte Quantisierungsschrittgröße für jeden Makroblock als eine Funktion der neuen mit jedem Makroblock assoziierten Komplexitätswerte berechnet wird.

**5.** Codierungsanordnung nach Anspruch 4, **dadurch gekennzeichnet, dass** die Berechnung neuer Komplexitätswerte in dem Schritt (D) weiterhin das Multiplizieren jedes neuen Komplexitätswertes mit einem Normalisierungsfaktor auf Basis des nachfolgenden Ausdrucks umfasst: F(norm) = X(in) / X(out)

wobei X(in) eine Summe von Komplexitätswerte für alle Makroblöcke ist, die in dem Schritt (A) hergeleitet wurden, und wobei x(out) eine Summe neuer Komplexitätswerte für alle Makroblöcke ist, die in dem Schritt (D) hergeleitet wurden.

**Revendications**

**1.** Procédé de codage vidéo appliqué à une séquence de cadres vidéo divisés en macroblocs, ledit procédé comprenant pour chaque cadre de la séquence les étapes de :

(A) codage (FP) dudit cadre dans un premier passage de codage avec une taille fixe d'étape de quantificateur pour générer un premier flux binaire de sortie et des valeurs de complexité associées à chaque macrobloc dudit cadre, lesdites valeurs de complexité étant égales au produit du nombre de bits utilisé pour coder chaque macrobloc et à ladite taille de l'étape de quantificateur ;
(B) décodage (DEC) dudit premier flux binaire de sortie pour générer un flux binaire de sortie décodé;
(C) dans ledit flux binaire de sortie décodé, détection d'artefacts bloquants pour composer une carte d'effets bloquants (BAM), ladite carte comprenant, pour chaque macrobloc, une valeur globale représentative d'un nombre d'artefacts limites internes dans le macrobloc concerné ;
(D) calcul de nouvelles valeurs de complexité pour chaque macrobloc en multipliant, pour chaque macrobloc, la valeur de complexité obtenue à l'étape (A) par un coefficient de cadrage dépendant linéairement de la valeur globale dudit macrobloc ;
(E) codage dudit cadre dans un deuxième passage de codage avec une taille modifiée de l'étape de quantification associée à chaque macrobloc, ladite taille modifiée de l'étape de quantification étant calculée, pour chaque macrobloc, comme une fonction des nouvelles valeurs de complexité associées à chaque macrobloc.

**2.** Procédé de codage vidéo selon la revendication 1, **caractérisé en ce que** le calcul des nouvelles valeurs de complexité à l'étape (D) comprend par ailleurs la multiplication de chaque nouvelle valeur de complexité par un facteur de normalisation basé sur l'expression suivante:
F(norm) = X(in)/X(out)
dans laquelle X(in) est une somme des valeurs de complexité pour tous les macroblocs dérivés dans l'étape (A) et X(out) est une somme de nouvelles valeurs de complexité pour tous les macroblocs dérivés de l'étape (D).

**3.** Procédé de codage vidéo selon la revendication 2, dans lequel le facteur de normalisation est réglé sur 1 si le cadre d'entrée à coder est du type I ou P.

**4.** Dispositif de codage d'une séquence de cadres vidéo divisés en macroblocs, ledit dispositif comprenant :

(a) au moins une branche de codage (52) comprenant en série au moins un circuit de quantification (522) et un circuit de longueur variable (523);
(b) un circuit de commande (55) prévu pour commander pour chaque cadre de la séquence l'exécution des étapes suivantes :

(A) codage (FP) dudit cadre dans un premier passage de codage avec une taille fixe d'étape de quantification pour générer un premier flux binaire de sortie et des valeurs de complexité associées à chaque macrobloc dudit cadre, lesdites valeurs de complexité étant égales au produit du nombre de bits utilisé pour coder chaque macrobloc et à ladite taille de l'étape de quantification ;
(B) décodage (DEC) dudit premier flux binaire de sortie pour générer un flux binaire de sortie décodé;
(C) dans ledit flux binaire de sortie décodé, détection d'artefacts bloquants pour composer une carte d'effets bloquants (BAM), ladite carte comprenant, pour chaque macrobloc, une valeur globale représentative d'un nombre d'artefacts limites internes dans le macrobloc concerné ;
(D) calcul de nouvelles valeurs de complexité pour chaque macrobloc en multipliant, pour chaque macrobloc, la valeur de complexité obtenue à l'étape (A) par un coefficient de cadrage dépendant linéairement de la valeur globale dudit macroblos ;

(E) codage dudit cadre dans un deuxième passage de codage avec une taille modifiée de l'étape de quantification associée à chaque macrobloc, ladite taille modifiée de l'étape de quantification étant calculée, pour chaque macrobloc, comme une fonction des nouvelles valeurs de complexité associées à chaque macrobloc.

5. Dispositif de codage selon la revendication 4, **caractérisé en ce que** le calcul des nouvelles valeurs de complexité à l'étape (D) comprend par ailleurs la multiplication de chaque nouvelle valeur de complexité par un facteur de normalisation basé sur l'expression suivante:

$F(norm) = X(in)/X(out)$

dans laquelle X(in) est une somme des valeurs de complexité pour tous les macroblocs dérivés dans l'étape (A) et X(out) est une somme de nouvelles valeurs de complexité pour tous les macroblocs dérivés de l'étape (D).

FIG.1

FIG.2

FIG.3

$X(in) = \Sigma X^{in}$

STAT2

F(norm)

$X(out) = \Sigma X^{out}$

BAM

MUL

DES

SP2

FRA

OB2

FIG.4

10

FIG.5